Europäisches Patentamt

European Patent Office

Office européen des brevets

(11) Veröffentlichungsnummer: **0 433 938 A2**

## EUROPÄISCHE PATENTANMELDUNG

(21) Anmeldenummer: 90124394.9

(22) Anmeldetag: 17.12.90

(51) Int. Cl.⁵: **F16B 19/08**

(30) Priorität: 22.12.89 DE 3942482

(43) Veröffentlichungstag der Anmeldung:
26.06.91 Patentblatt 91/26

(84) Benannte Vertragsstaaten:
AT BE CH ES FR GB IT LI LU NL SE

(71) Anmelder: Schildknecht, Ulrich
Hasselbusch 73
W-2359 Henstedt-Ulzburg 2(DE)

(72) Erfinder: Schildknecht, Ulrich
Hasselbusch 73
W-2359 Henstedt-Ulzburg 2(DE)

(74) Vertreter: Schulmeyer, Karl-Heinz, Dr.
Kieler Strasse 59a
W-2087 Hasloh(DE)

(54) **Selbststanzende Befestigungsvorrichtung für wasser- und gasdichte Stanznietverbindungen.**

(57) Die Erfindung betrifft eine selbststanzende Befestigungsvorrichtung für wasser- und/oder gasdichte Stanznietverbindungen, bestehend aus einem Stanzniet und einem an sich bekannten Gegenhalterwerkzeug. Der Stanzniet (1) weist an der Unterseite des Nietkopfes (5) in unmittelbarer Nachbarschaft des an den Nietkopf (5) anschließenden Teils des Nietschaftes (6) eine umlaufende Ringnut (7) mit Dichtring (2) auf, wobei die Abmessungen von Ringnut (7) und Dichtring (2) so aufeinander abgestimmt sind, daß der Dichtring (2) in bestimmter Lage so positioniert ist, daß er sowohl an der Unterseite des Nietkopfes (5) als auch an der Außenseite des anschließenden Teils des Nietschaftes (6) dicht anliegt.

Fig. 1

EP 0 433 938 A2

## SELBSTSTANZENDE BEFESTIGUNGSVORRICHTUNG FÜR WASSER- UND GASDICHTE STANZNIETVER-BINDUNGEN

Vorliegende Erfindung betrifft eine selbststanzende Befestigungsvorrichtung nach dem Oberbegriff des Anspruchs 1, mit der mindestens zwei Bleche oder Blechteile ohne Beeinträchtigung ihrer Oberfläche nicht nur schnell, einfach und dauerhaft, sondern auch wasser- und gasdicht miteinander verbunden werden können.

Selbststanzende Befestigungsvorrichtungen sind bereits bekannt. Eine solche wird z.B. in DE-C-23 45 017 beschrieben. Sie besteht aus einem Niet und einem Gegenhalterwerkzeug zum Einsetzen des Niets. Der Niet weist einen Kopf- und einen Schaftteil auf. Das freie Ende des Schaftteils ist als Lochstempel ausgebildet, mit dessen Hilfe bei entsprechendem Druck auf den Nietkopf im Zusammenwirken mit dem Gegenhalterwerkzeug die zu verbindenden Bleche an der vorgesehenen Stelle durchstanzt werden können. Anschließend erfolgt dann die Vernietung, bei der ein Materialfluß des unteren Bleches in eine ringförmige Ausnehmung des Nietschaftes bewirkt wird, durch die der Niet axial festgelegt und beide Bleche fest miteinander verbunden werden. Die ausgestanzten Blechscheiben fallen dabei durch eine Öffnung des Gegenhalterwerkzeuges nach unten.

Aus DE-C-30 03 908 ist ein Stehbolzen mit Stanz- und Nietverhalten bekannt, der einen als Niet ausgebildeten Stanzteil aufweist, der im Tafelblech verankert werden kann. Durch entsprechenden Druck wird die als Stoßfläche mit einer Schneidkante ausgebildete freie Stirnfläche des Stanzteils durch das Tafelblech gedrückt, wobei ein Stanzputzen aus dem Tafelblech ausgestanzt wird. Dieser wird durch einen im Gegenwerkzeug, einer Matrize mit axialer Einsenkung, befindlichen Lochstempel in die Ausnehmung des Stanzteils gedrückt und fest verklemmt. Gleichzeitig wird der Mantel des Stanz- und Nietteils gegen den Boden der axialen Einsenkung der Matrize gedrückt und dabei radial nach außen verformt, wobei eine feste Nietverbindung des Stehbolzens mit dem Tafelblech gebildet wird. Eine Vernietung von zwei oder mehr Blechen wird nicht beschrieben. Es sind aber selbststanzende Befestigungsvorrichtungen, im folgenden kurz Stanzniete genannt, bekannt und im Handel erhältlich, die in der vorbeschriebenen Weise wirken und zur Herstellung von Stanznietverbindungen zwischen mindestens zwei Blechen verwendet werden.

Solche Stanzniete erlauben die Durchführung des Stanzens von Löchern in die miteinander zu verbindenden Bleche, das Einsetzen der Niete in die Löcher sowie das Vernieten in einem einzigen Schritt. Dadurch wird das Vernieten außerordentlich einfach und schnell durchführbar, und die erhaltenen Nietverbindungen zeichnen sich in der Regel durch eine gute Haltbarkeit und Dichtigkeit aus. Diese Erfordernisse sind insbesondere beim Behälterbau unabdingbare Voraussetzung für die Eignung solcher Nietverbindungen.

Es hat sich jedoch gezeigt, daß die durch Stanzniete gebildeten Nietverbindungen die hohen Ansprüche an Wasser- und Gasdichtigkeit, die an die Behälterwände gestellt werden, nicht immer in dem erforderlichen oder gewünschten Maße erfüllen. Insbesondere können Korrosions- und Dichtigkeitsprobleme auftreten, wenn die zu verbindenden Bleche große Unterschiede in ihrer Stärke aufweisen, d.h. wenn z.B. ein Grob- oder Mittelblech mit einem Feinblech verbunden werden soll. Hierbei können beim Vernieten mit den bekannten Stanznieten im Bereich der Stanzlochung Risse, Abbrüche und Deformationen vor allem am dünneren Blech auftreten. Dies wirkt sich u.a. dadurch nachteilig aus, daß selbst bei einer stärkeren Stauchung des Nietes nicht mehr der erforderliche Anpreßdruck des Nietes gegen die Bohrungswandung, d.h. der erforderliche Lochleibungsdruck, erreicht wird, der für die Qualität der Nietverbindung, insbesondere für die Scherfestigkeit, von wesentlicher Bedeutung ist. Solche nicht einwandfreien Nietverbindungen sind weder fest genug noch wasser- und gasdicht und erfüllen auch nicht die Anforderungen an die Korrosionsstabilität der Nietverbindungen.

Der Erfindung liegt daher die Aufgabe zugrunde, eine selbststanzende Befestigungsvorrichtung der vorbezeichneten Art so zu verbessern, daß die oben genannten Nachteile ganz oder zu einem wesentlichen Teil vermieden werden können, ohne daß auf die Vorteile verzichtet werden muß, die mit der einfachen und schnellen Handhabung solcher Stanzniete verbunden sind. Insbesondere sollen verbesserte selbststanzende Befestigungsvorrichtungen bereitgestellt werden, mit deren Hilfe auch unter kritischen Bedingungen, wie sie bei der Verbindung von unterschiedlich starken Blechen auftreten, in zuverlässiger Weise wasser- und gasdichte Nietverbindungen zwischen zwei oder mehreren Blechen hergestellt werden können.

Diese Aufgabe wird erfindungsgemäß durch die im kennzeichnenden Teil des Anspruchs 1 angegebenen Merkmale gelöst.

Es ist zwar aus DE-B-22 33 311 bekannt, bei einem zweiteiligen Verbindungselement zum Verbinden von Werkstücken einen Gummidichtring so am Bolzenschaft anzuordnen, daß er innerhalb der eingerollten Schulter des Bolzenkopfes in der dadurch gebildeten Höhlung einlagbar ist. Beim Zusammenfügen von Bolzen und Hülse des Verbindungselements wird das freie Ende der Hülse in die durch die eingerollte Schulter des Bolzenkopfes gebildete Hohlkehle eingeführt und dort umgerollt, wobei auch der Gummidichtring umfaßt wird, so daß beim endgültigen Zusammenbau der Gummidichtring eine Dichtung bildet. Eine solche recht komplizierte Konstruktion ist für den erfindungsgemäßen Zweck ungeeignet.

In DE-C-26 51 780 wird ein Distanz-Blindniet beschrieben, bei dem, falls erwünscht, über die Blindniethülse eine Dichtscheibe geschoben werden kann, bis sie am Hülsenkopf anliegt. Die Gesamtkonstruktion ist nicht vergleichbar mit der eines Stanznietes, sie gibt dem Fachmann auch keinerlei Hinweise auf eine Übertragbarkeit des Lösungsprinzips auf Stanzniete.

Dies gilt in analoger Weise auch für die in DE-A-34 07 464 beschriebene Blindnietanordnung, bei der zwar ebenfalls ein Dichtring am Hülsenkopf zur Abdichtung vorgesehen ist, die offenbarte Konstruktion jedoch nicht für Stanznietverbindungen geeignet ist, so daß auch in diesem Falle der erfindungsgemäße Lösungsweg einem Fachmann nicht in ersichtlicher Weise nahegelegt wird.

Es wurde nunmehr überraschend gefunden, daß mit der verbesserten selbststanzenden Befestigungsvorrichtung insbesondere bei der Verbindung von sehr dünnen Deckblechen, beispielsweise mit einer Stärke von bis zu 1 mm, mit Trägerblechen, z.B. mit einer Stärke von 3 mm oder mehr, einwandfreie wasser- und gasdichte Stanznietverbindungen erhalten werden, während die Erfahrung gezeigt hat, daß bei der Verwendung von herkömmlichen Stanznieten ohne Dichtungsring stets eine gewisse Anzahl von Stanznietverbindungen nicht wasser- und gasdicht ist.

Vorzugsweise besteht der Dichtring der erfindungsgemäßen Befestigungsvorrichtung aus einem säure- und laugenbeständigen, nicht quellenden gummielastischen Material.

Die vorteilhafte Wirkung der erfindungsgemäßen selbststanzenden Befestigungsvorrichtung beruht offenbar darauf, daß der Dichtring, der durch die Ringnut an der Unterseite des Nietkopfes in einer bestimmten gewünschten Lage gehalten wird, so daß er auch am Nietschaft dicht anliegt, in der fertigen Stanznietverbindung nicht nur den Nietkopf zum Deckblech hin unter dem durch die Vernietung ausgeübten Druck gas- und wasserdicht abdichtet, sondern sich aufgrund seiner Konsistenz zugleich auch fest an den oberen äußeren Teil des Nietschaftes anpreßt und dadurch die Wirksamkeit des Lochleibungsdrucks des Niets verstärkt, durch den die erforderliche kraftschlüssige Verbindung zwischen gestauchtem Niet und den Blechen hergestellt wird. Dies ist besonders wichtig in Fällen, in denen während des Stanz- und Nietvorganges eines der Bleche, meist das dünnere Deckblech, im Bereich der Stanzlochung reißt und/oder sich so deformiert, daß in diesem Bereich kein oder nur noch ein unzureichender Lochleibungsdruck aufgebaut werden kann. Die Druckkraft, die durch die überstehende Schulter des Nietkopfes auf den am Nietschaft dicht anliegenden Dichtring während und nach dem Nieten ausgeübt wird, reicht offenbar aus, den durch die Verformung des Deckbleches herabgesetzten Lochleibungsdruck wenigstens so weit zu kompensieren, daß auch in diesen Fällen Stanznietverbindungen erhalten werden, die sowohl die erforderliche Scherfestigkeit als auch die gewünschte Wasser- und Gasdichtigkeit bei dynamischer Belastung aufweisen.

Die erfindungsgemäße selbststanzende Befestigungsvorrichtung eignet sich insbesondere zum selbststanzenden Vernieten von verzinkten, einbrennlackierten und folienbeschichteten Blechen oder von Blechen aus rostfreiem Stahl und Aluminiumlegierungen, wobei der Einsatz dieser Befestigungsvorrichtungen eine schonende und saubere Verarbeitung ermöglicht, bei der die Oberflächenqualität der vernieteten Bleche erhalten bleibt und die Wasser- und/oder Gasdichtigkeit der Nietverbindungen bei hoher Scherfestigkeit gewährleistet ist. Die Verarbeitung kann auf bekannten, im Handel erhältlichen Nietmaschinen schnell, einfach, sicher und kostengünstig erfolgen.

Die Erfindung wird nachfolgend anhand von Zeichnungen, in denen ein Ausführungsbeispiel dargestellt ist, näher erläutert.

Es zeigen:

Figur 1     einen erfindungsgemäßen Stanzniet im Längsschnitt;

Figur 2     eine Schnittansicht einer Nietverbindung mit Stanzniet.

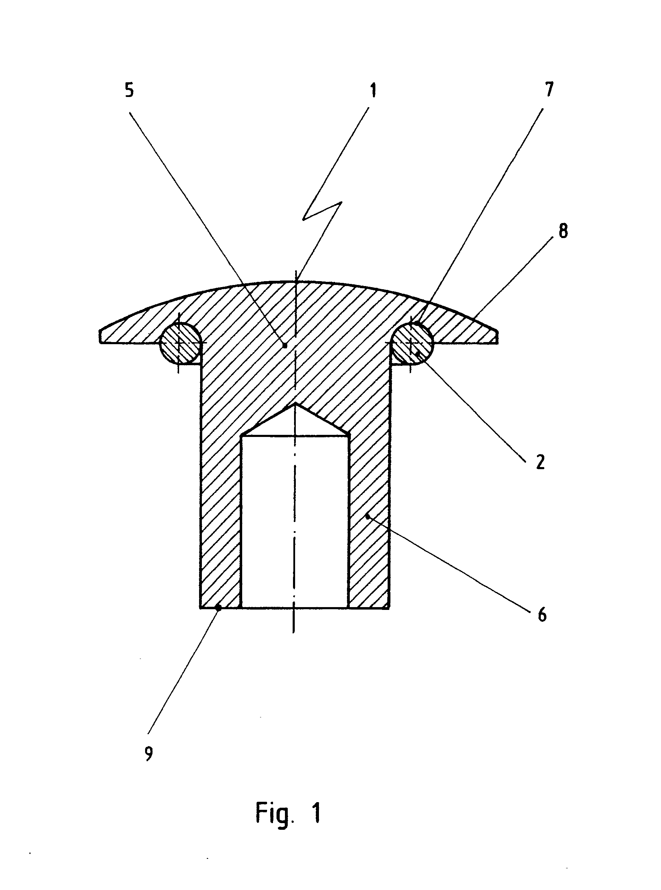

In Figur 1 ist eine konkrete Ausführungsform des Stanznietes 1 dargestellt mit einem nicht verformbaren Nietkopf 5 und einem Nietschaft 6, wobei der Nietkopf 5 eine Schulter 8 aufweist, die allseitig über den Nietschaft 6 übersteht. Die Unterseite der überstehenden Schulter 8 ist eben. Der verformbare, hohlzylinderförmige Nietschaft 6 weist an seinem freien Ende eine ebene, ringförmige Stirnfläche 9 auf, die die Funktion eines Lochstempels besitzt.

Dieser Stanzniet 1 weist an der Unterseite des Nietkopfes 5 in unmittelbarer Nachbarschaft des an den Nietkopf 5 anschließenden Nietschaftes 6 eine umlaufende Ringnut 7 mit Dichtring 2 auf, wobei die Abmessungen von Ringnut 7 und Dichtring 2 so aufeinander abgestimmt sind, daß ein Teil des Dichtringes 2 in die Ringnut 7 aufnehmbar und der Dichtring 2 dadurch in bestimmter Lage so positioniert ist, daß er sowohl an der Unterseite des Nietkopfes 5 als auch an der Außenseite des anschließenden Teils des Nietschaftes 6 dicht anliegt.

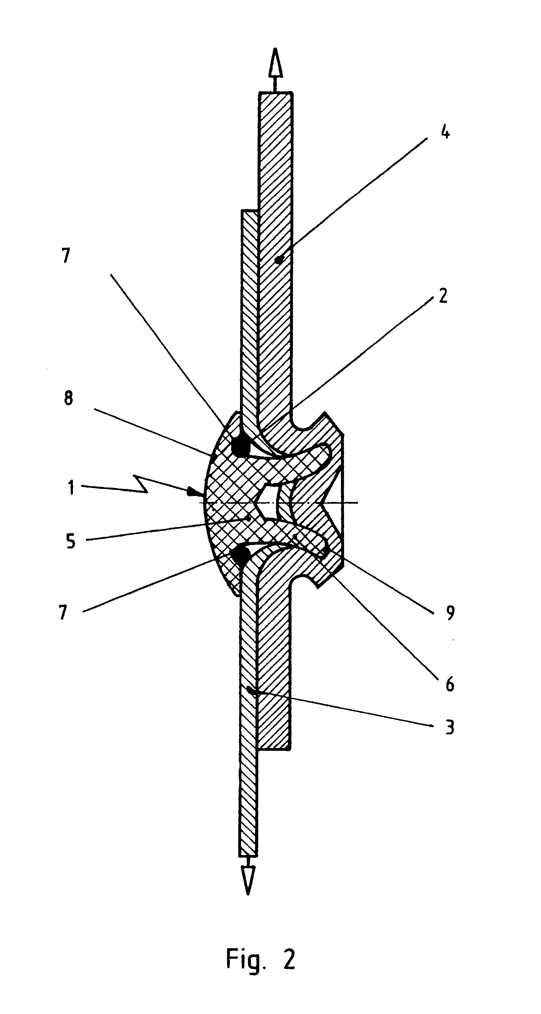

Die in Figur 2 dargestellte Nietverbindung zeigt den Stanzniet 1 mit Dichtring 2 in gestauchtem Zustand nach der Stanzvernietung eines dünnen Deckbleches 3 mit einem stärkeren Trägerblech 4. Die Stanzvernietung erfolgt mit Hilfe eines nicht dargestellten, an sich bekannten Gegenhalterwerkzeuges, das im wesentlichen aus einer Matrize mit einer zentrischen Bohrung und einem in dieser Bohrung beweglich angeordneten Stempel besteht, wobei der Stempel an seiner Spitze mit einem Spreizkegel versehen ist. Mit Hilfe eines ebenfalls nicht dargestellten, an sich bekannten Preßstempels kann ein ausreichender Druck auf den Nietkopf 5 des Stanznietes 1 ausgeübt werden. Während des Stanz- und Nietvorganges werden das Gegenhalterwerkzeug und der Preßstempel relativ gegeneinander bewegt und dabei ein Druck auf den Nietkopf 5 des Stanznietes 1 ausgeübt, der ausreicht, um bei entsprechendem Gegendruck durch das Gegenhalterwerkzeug den Nietschaft 6 durch das Deckblech 3 zu treiben, wobei die wie ein Lochstempel wirkende freie Stirnfläche 9 des Nietschaftes 6 einen Putzen aus dem Deckblech 3 herausstanzt.

Dieser Stanzputzen wird aufgrund des Gegendruckes, der von der Matrize und dem Spreizkegel an der Spitze des aus der Matrize herausbewegten Stempels ausgeht, zusammen mit dem an dieser Stelle vorhandenen Teil des Trägerbleches 4 kegelförmig verformt und in dem Hohlzylinder des Nietschaftes 6 verklemmt. Der untere Teil des Nietschaftes 6 dringt durch das Deckblech 3 hindurch bis in das Trägerblech 4, ohne daß die freie Stirnfläche 9 des Nietschaftes 6 dabei das Trägerblech 4 ganz durchstanzt. Durch den gegenläufigen Druck von Preßstempel und Matrize mit Stempel wird der Stanzniet 1 am Ende des Stanzvorganges gestaucht, wobei gleichzeitig die freie Stirnfläche 9 des Nietschaftes 6 radial nach außen verformt und der Nietkopf 5 mit der Unterseite seiner Schulter 8 auf das Trägerblech 4 gedrückt wird mit der Folge, daß der Dichtring 2 dicht an die Oberfläche des Trägerbleches 4 und an die Außenseite des Nietschaftes 6 gepreßt wird. Hierdurch wird eine vollständige wasser- und gasdichte Abdichtung der Nietverbindung und gleichzeitig eine Unterstützung des Lochleibungsdruckes des Stanznietes 1 und damit eine weitere Verstärkung der Scherfestigkeit der Nietverbindung bewirkt.

Durch die vorgesehene Ringnut 7 auf der Unterseite des Nietkopfes 5 und die zwangsläufige Führung des Dichtringes 2 über den Durchmesser des Nietschaftes 6 wird eine stabile Lage des Dichtringes 2 erreicht, die auch bei Verschiebungen der Nietachse, wie sie durch entsprechende Scherkräfte verursacht werden können, gewährleistet ist.

## Ansprüche

1. Selbststanzende Befestigungsvorrichtung für wasser- und/oder gasdichte Stanznietverbindungen, bestehend aus einem Stanzniet und einem Gegenhalterwerkzeug mit Matrize und einem in einer zentrischen Bohrung der Matrize beweglich angeordneten Stempel mit Spreizkegel an seiner Spitze, wobei der Stanzniet einen nicht verformbaren Nietkopf mit über den Nietschaft überstehender, an der Unterseite ebener Schulter und einen verformbaren hohlzylinderförmigen Nietschaft mit einer ebenen, ringförmigen Stirnfläche an seinem freien Ende aufweist, dadurch gekennzeichnet, daß der Stanzniet (1) an der Unterseite des Nietkopfes (5) in unmittelbarer Nachbarschaft des an den Nietkopf (5) anschließenden Teils des Nietschaftes (6) eine umlaufende Ringnut (7) mit Dichtring (2) aufweist, wobei die Abmessungen von Ringnut (7) und Dichtring (2) so aufeinander abgestimmt sind, daß ein Teil des Dichtringes (2) in die Ringnut (7) aufnehmbar und der Dichtring (2) in bestimmter Lage so positioniert ist, daß er sowohl an der Unterseite des Nietkopfes (5) als auch an der Außenseite des anschließenden Teils des Nietschaftes (6) dicht anliegt.

2. Selbststanzende Befestigungsvorrichtung nach Anspruch 1, dadurch gekennzeichnet, daß der Dichtring (2) aus einem säure- und laugenbeständigen, nicht quellbaren, gummielastischen Material besteht.

Fig. 1

Fig. 2